# DEMANDE DE BREVET EUROPEEN

(11) **EP 3 767 876 A1**
(43) Date de publication de la demande: **20.01.2021**
(21) Numéro de dépôt: 20186245.5
(22) Date de dépôt: 16.07.2020
(51) Int. Cl.: H04L 9/32, G06Q 20/22

(54) **PROCEDE DE VERIFICATION D'UNE TRANSACTION DANS UNE BASE DE DONNEES DE TYPE CHAINE DE BLOCS**

(30) Priorité: 16.07.2019 FR 1907996
(71) Demandeur: Idemia Identity & Security France, 92400 Courbevoie (FR)
(72) Inventeur: CHABANNE, Hervé, 92400 COURBEVOIE (FR)
(74) Mandataire: Regimbeau

(57) **Abrégé**

La présente invention concerne un procédé de vérification d'une transaction dans une base de données (3) de type chaîne de blocs, le procédé étant caractérisé en ce qu'il comprend des étapes de :
(b) génération par un dispositif de preuve (4) d'une preuve du fait qu'il existe un bloc valide publié dans ladite base de données (3) tel que ledit bloc contient des données descriptives de ladite transaction ;
(c) transmission à un dispositif client (2) d'au moins ladite preuve ;
(d) vérification par le dispositif client (2) que la preuve est valide.

## Description

### DOMAINE TECHNIQUE GENERAL

La présente invention concerne un procédé de vérification d'une transaction dans une base de données de type « chaîne de blocs ».

### ETAT DE LA TECHNIQUE

Sont apparues ces dernières années des bases de données appelées « chaines de blocs » (en anglais, « blockchain »).

Une base de données de type chaîne de blocs est distribuée entre plusieurs nœuds de stockage d'un réseau. Les nœuds de stockage sont configurés pour valider des données écrites dans la base de données par la mise en œuvre d'une méthode de recherche de consensus entre les nœuds de stockage. Une telle méthode est par exemple la méthode connue de « preuve de travail » (« proof of work » en anglais, ou simplement POW). Le contenu de la base de données est ainsi protégé contre des falsifications et ce malgré son caractère distribué.

La plus célèbre base de données de type « chaine de blocs » est celle utilisée dans le système de transaction de monnaie électronique Bitcoin®. La base de données du système Bitcoin® contient un historique de toutes les transactions passées effectuées entre des comptes d'utilisateurs du système. La nécessité d'avoir recours à une entité centralisée telle qu'une banque pour authentifier des transactions est ainsi supprimée.

On appelle « wallet » (en français portefeuille) un élément client stockant les clés privées d'un utilisateur et permettant d'effectuer des transactions sur la base de données de type « chaîne de blocs ». Si la plupart des wallets sont des logiciels clients installés sur un terminal personnel (ordinateur, smartphone) ou un serveur distant, certains wallets dits « hardware wallet » (en français portefeuille physique) prennent la forme d'un objet matériel tel qu'un token usb stockant les clés de manière autonome (et séparée du réseau) pour apporter un niveau de sécurité supérieur.

Une tâche des wallets est de vérifier la présence dans une blockchain type Bitcoin de la publication d'une transaction donnée. Dans le cas d'une base de données de type « chaîne de blocs » mettant en œuvre une recherche de consensus par preuve de travail comme l'est Bitcoin, cette vérification consiste à s'assurer qu'une POW a été correctement calculée, i.e. que l'empreinte cryptographique d'un bloc dont une partie est déjà déterminée possède une forme particulière, à savoir commence par un nombre donné de 0. Pour des vérifications plus poussées sur Bitcoin, on peut exiger d'avoir le POW vérifié sur plusieurs blocs chainés. Pour d'autres base de données de type « chaîne de blocs », cette vérification peut être celle d'une signature cryptographique.

Si de manière générale une telle vérification ne pose aucun problème à un équipement complexe tel qu'un ordinateur ou un terminal mobile de type smartphone, un petit microcontrôleur type token usb ou carte à puce n'a ni la connectivité, ni la puissance de calcul nécessaires pour effectuer la vérification (un bloc dans Bitcoin peut faire 1 MB). Pour cette raison, les wallets physiques nécessitent toujours d'être connectées à un ordinateur pour être utilisées, ordinateur qui peut ne pas être de confiance.

Il serait souhaitable de permettre à des équipements simples tels qu'une carte à puce de servir de wallet de la base de données de type «chaîne de blocs », de sorte à permettre des transactions aussi facilement qu'avec une carte bancaire, et sans risque de piratage.

### PRESENTATION DE L'INVENTION

La présente invention se rapporte ainsi selon un premier aspect à un procédé de vérification d'une transaction dans une base de données de type chaîne de blocs, le procédé étant caractérisé en ce qu'il comprend des étapes de :
(b) génération par un dispositif de preuve d'une preuve du fait qu'il existe un bloc valide publié dans ladite base de données tel que ledit bloc contient des données descriptives de ladite transaction ;
(c) transmission à un dispositif client d'au moins ladite preuve ;
(d) vérification par le dispositif client que la preuve est valide.

Selon d'autres caractéristiques avantageuses et non-limitatives :
- les données descriptives de ladite transaction contenues dans ledit bloc comprennent au moins une donnée d'identification de la transaction, l'étape (c) comprend en outre la transmission au dispositif client de ladite donnée d'identification de la transaction, et l'étape (d) comprend la vérification de ladite donnée d'identification transmise de la transaction ;
- ladite transaction est émise par le dispositif client, la vérification de ladite donnée d'identification transmise de la transaction comprenant la vérification qu'elle correspond à une donnée d'identification de la transaction telle qu'émise par le dispositif client ;
- les données descriptives de ladite transaction contenues dans ledit bloc comprennent également une donnée d'aléa, l'étape (c) comprend en outre la transmission au dispositif client de ladite donnée d'aléa, et l'étape (d) comprenant la vérification la ladite donnée d'identification transmise de la transaction correspond à une donnée d'aléa définie par le dispositif client ;
- ladite donnée d'aléa est inséré par le dispositif client dans un champ adapté de la transaction, en particulier un champ OP_RETURN ;
- ladite donnée d'identification de la transaction est choisie parmi un identifiant de la transaction, une signature de transaction au moyen d'une clé privée d'un utilisateur du dispositif client, une empreinte cryptographique d'une clé publique d'un bénéficiaire de la transaction, un identifiant d'une transaction précédente de la transaction ;
- l'étape (b) comprend également la transmission au dispositif client d'une empreinte cryptographique candidate, ladite preuve étant également une preuve du fait qu'un identifiant dudit bloc a pour empreinte cryptographique ladite empreinte cryptographique candidate ;
- le procédé comprend une étape (a) de publication de ladite transaction dans la base de données de type chaîne de blocs par un dispositif valideur de transactions ;
- l'étape (a) comprend la génération dudit bloc contenant des données descriptives de ladite transaction et son ajout dans ladite base de données type chaîne de blocs ;
- l'étape (a) comprend la vérification préalable de la validité de ladite transaction par le dispositif valideur de transactions, et l'étape (b) comprend la vérification par le dispositif de preuve que ledit bloc contenant des données descriptives de ladite transaction est valide ;
- la vérification de la validité dudit bloc comprend la vérification qu'un critère spécifique à la base de données de type chaîne de blocs est vérifié par l'empreinte cryptographique d'un n-uplet d'au moins un nonce associé au bloc et un fragment du contenu du bloc, ou par une signature du bloc ;
- ladite preuve est une preuve à divulgation nulle de connaissances, en particulier un objet cryptographique de type zkSNARK ;
- le dispositif client est de type carte à puce.

Selon un deuxième aspect, l'invention concerne un ensemble de vérification d'une transaction dans une base de données de type chaîne de blocs comprenant un dispositif client et un dispositif de preuve connectées, caractérisé en ce que :
- Le dispositif de preuve est configuré pour générer une preuve du fait qu'il existe un bloc valide publié dans ladite base de données tel que ledit bloc contient des données descriptives de ladite transaction, et transmettre au dispositif client au moins ladite preuve ;
- le dispositif client est configuré pour vérifier que la preuve est valide.

Selon d'autres caractéristiques avantageuses et non-limitatives, l'ensemble comprend en outre un dispositif valideur de transactions configuré pour publier ladite transaction dans la base de données de type chaîne de blocs.

Selon un troisième et un quatrième aspect, l'invention concerne un produit programme d'ordinateur comprenant des instructions de code pour l'exécution d'un procédé selon le premier aspect de vérification d'une transaction dans une base de données de type chaîne de blocs, lorsque ledit procédé est exécuté sur un ordinateur ; et un moyen de stockage lisible par un équipement informatique sur lequel un produit programme d'ordinateur comprend des instructions de code pour l'exécution d'un procédé selon le premier aspect de vérification d'une transaction dans une base de données de type chaîne de blocs.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente de manière schématique un système de vérification d'une transaction, selon un mode de réalisation.

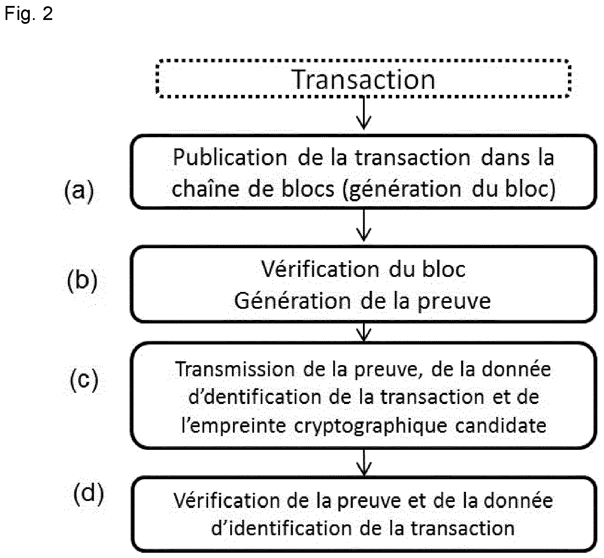

- La figure 2 est un organigramme d'étapes d'un procédé de vérification d'une transaction mis en œuvre par le système représenté en figure 1, selon un mode de réalisation.

Sur l'ensemble des figures, les éléments similaires portent des références identiques.

### DESCRIPTION DETAILLEE DE L'INVENTION

### Architecture

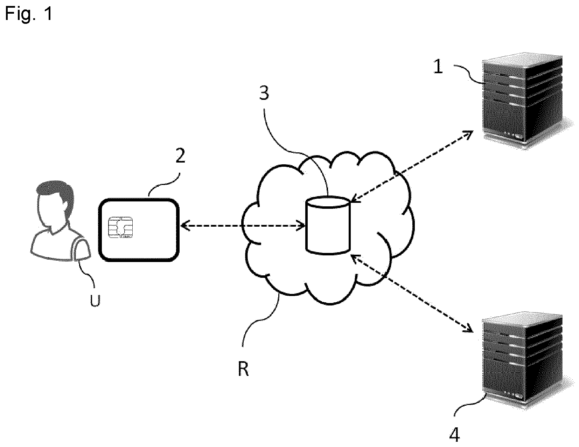

En référence à la **figure 1****,** un système de transactions comprend au moins un dispositif valideur de transactions 1, appelé « mineur », au moins un dispositif client 2, appelé « wallet » (généralement un grand nombre d'entre eux). Dans le cadre du présent procédé on y adjoint un dispositif de preuve 4.

Les dispositifs 1, 2, 4 communiquent entre eux par l'intermédiaire d'au moins un réseau R, par exemple le réseau Internet, un réseau cellulaire, ou une combinaison de tels réseaux.

Les dispositifs 1, 2 ont chacun accès en lecture et en écriture à une base de données 3 de type chaîne de blocs stockée dans le réseau R (un accès en lecture suffit pour le dispositif de preuve 4). Il est tout à fait possible qu'un équipement tel qu'un ordinateur personnel soit à la fois un dispositif valideur de transactions 1 et un dispositif client 2, similairement un dispositif valideur de transaction 1 peut également être le dispositif de preuve 4, etc.

La base de données 3 est publique, au sens où elle est libre d'accès en lecture non seulement par les dispositifs 1, 2, 4 en présence mais également à tout autre dispositif tiers. Tout dispositif tiers peut en particulier consulter les données écrites par l'un des dispositifs 1, 2, 4.

Ainsi, le dispositif valideur de transactions 1 dispose d'un compte d'accès en lecture et en écriture dans la base de données 3. A cet effet, le dispositif valideur de transactions 1 mémorise deux clés mutuellement associées : une clé privée de signature, propre au dispositif 1 et une clé publique de vérification de signature également propre au dispositif 1. La clé privée permet au dispositif 1 d'écrire des données signées dans la base de données ; elle est destinée à ne pas être communiquée à des tiers. La clé publique permet au dispositif 1 (et à tout autre titulaire d'un compte d'accès à la base de données 3) de vérifier qu'une donnée présente dans la base de données 3 a été écrite dans celle-ci par le dispositif 1.

Le dispositif client 2 dispose également d'un compte d'accès en lecture et en écriture dans la base de données 3. Comme pour le dispositif valideur de transactions 1, le dispositif client 2 mémorise une clé publique et une clé privée mutuellement associées et qui lui sont propres. Généralement, le dispositif client 2 est désigné par une adresse qui est typiquement une empreinte cryptographique de sa clé publique.

L'« empreinte cryptographique » d'une donnée (appelé également « condensat » ou « haché » de la donnée, de l'anglais « hash ») est obtenue en appliquant une fonction de hachage cryptographique à la donnée (typiquement des familles SHA-1 ou SHA-2, en particulier SHA-256). L'empreinte a une taille fixe et ne révèle rien sur la donnée dont elle est issue : on ne peut pas retrouver cette donnée à partir de son empreinte, en tout cas tant que la fonction de hachage utilisée est considérée comme sûre. On peut cependant recalculer l'empreinte à partir de la donnée pour vérifier qu'elle est correcte.

La base de données 3 est distribuée ou décentralisée dans le réseau R, c'est-à-dire qu'elle est stockée par une pluralité de nœuds du réseau R avec lesquels les dispositifs 1, 2, 4 peuvent communiquer.

La base de données 3 est comme expliqué une base de données de type « chaîne de blocs ». Dans le présent texte, on définit une base de données de type « chaîne de blocs » comme une base de données mémorisée par une pluralité de nœuds de stockage configurés pour valider des données écrites dans la base de données par la mise en œuvre d'une méthode de recherche de consensus entre les nœuds de stockage. Une telle méthode est par exemple la méthode connue de « preuve par le travail » (« proof of work » en anglais). Le contenu de la base de données 3 est ainsi protégé contre des falsifications et ce malgré son caractère distribué / décentralisé. Chaque bloc présente généralement :
- un contenu du bloc (ou « payload »), constitué généralement des données descriptives d'un ensemble de transactions ;
- un en-tête du bloc (ou « header »), contenant des données descriptives du bloc en lui-même, c'est-à-dire des informations telles qu'un identifiant du bloc, un identifiant du bloc précédent dans la chaîne de blocs, un nonce, un numéro de version, un horodatage, un niveau de difficulté, etc.

Dans ce qui suit, on prendra l'exemple d'une base de données 3 conforme à celle utilisée par le système de transaction Bitcoin®. Ainsi, sont susceptible d'être mémorisées dans la base de données 3 des données représentatives d'une transaction, entre deux dispositifs client 2, d'un certain montant en Bitcoins.

Chacun des dispositifs 1, 2, 4 comprend au moins un processeur configuré pour procéder à des calculs de données et une interface de communication pour communiquer avec les autres dispositifs et la base de données 3.

La fonction principale assurée par le dispositif valideur de transactions 1 est de « miner » des nouveaux blocs de ladite chaîne de blocs. Chaque fois qu'un ensemble de transactions est validé, il constitue un bloc. Si ce bloc remplit certains critères spécifiques à la chaîne de blocs du système de transaction (voir plus loin), il est alors ajouté au sommet de la chaîne et le dispositif valideur de transactions 1 qui a constitué ce bloc est récompensé pour son travail. Chaque dispositif valideur de transaction 1 est typiquement un serveur dédié.

Le dispositif client 2 est quant à lui un dispositif personnel d'un utilisateur U lui permettant d'effectuer des transactions en son nom, par exemple envoyer ou recevoir des Bitcoins. Dans le présent cas, le dispositif client 2 est préférentiellement un dispositif physique léger tel qu'une carte à puce ou un élément de sécurité (Secure Element, SE) d'un terminal tel qu'un smartphone, c'est-à-dire un microprocesseur dédié fermé de type enclave. On comprendra que la présente invention n'est pas limitée à ces cas et que le dispositif client 2 peut toujours être un smartphone, une tablette tactile, un ordinateur personnel, etc.

Le dispositif de preuve 4 est typiquement un serveur d'un fournisseur de solution de sécurité (FSS), d'un organisme marchand, etc., avantageusement un équipement de confiance.

### Procédé de vérification d'une transaction

Par vérification d'une transaction, on entend vérification de la publication de cette transaction dans un bloc de ladite chaîne de blocs, et la vérification de la validité d'au moins ce bloc (et d'éventuellement de blocs précédents dans la chaîne de blocs, typiquement six blocs).

Dans la suite de la présente description on considérera par commodité que la vérification de la transaction est demandée au niveau du dispositif client 2 l'ayant émise (i.e. c'est le même utilisateur U qui émet la transaction et souhaite vérifier qu'elle soit prise en compte de manière correcte et non frauduleuse), bien qu'en pratique on puisse vérifier n'importe quelle transaction du fait du caractère public de la base de données 3 de type chaîne de blocs.

On suppose qu'un compte d'accès en lecture et en écriture dans la base de données 3 a été créé pour l'utilisateur U. La création du compte comprend l'attribution à l'utilisateur U des deux clés mutuellement associées évoqué précédemment : une clé privée de signature, propre à l'utilisateur U et une clé publique de vérification de signature également propre à l'utilisateur U. Les deux clés de l'utilisateur U sont mémorisées dans une mémoire du dispositif client 2 sur commande de l'utilisateur, et/ou prédéterminées.

Dans ce qui suit, toute donnée écrite dans la base de données 3 à la demande d'une entité titulaire d'un compte d'accès à la base de données 3 est implicitement signée avant son écriture au moyen de la clé privée propre à cette entité. En outre, toute donnée signée lue dans la base de données 3 par un tiers titulaire d'un compte d'accès à la base de données 3 est implicitement vérifiée au moyen de la clé publique propre à l'entité, de sorte à obtenir la donnée originellement fournie par l'entité.

Ladite signature, notée ScriptSig pour Bitcoin, est par exemple effectuée en utilisant la cryptographie à courbes elliptiques, dite ECDSA. En l'occurrence, la courbe employée dans le système Bitcoin est secp256k1.

De manière générale, toute transaction est définie par un ensemble de données descriptives de la transaction, comprenant au moins une indication d'un montant de la transaction et une « sortie », c'est-à-dire la clé publique, ou du moins l'empreinte cryptographique de cette clé publique, notée scriptPubKey pour Bitcoin, du bénéficiaire (celui qui reçoit un certain montant d'une unité monétaire tel que des Bitcoin). Il peut y avoir plusieurs sorties, chacune associée à un montant.

Avantageusement, les données descriptives d'une transaction incluent en outre une « entrée », c'est à dire l'identifiant, noté previous tx pour bitcoin, d'une ou plusieurs transactions précédentes (i.e. dont le bénéficiaire est l'émetteur de la présente transaction) dont le montant de sortie est suffisant pour couvrir la transaction, i.e. justifiant la disponibilité des fonds objet de la transaction. Une transaction équilibre toujours ses entrées et ses sorties.

Il est alors facile de vérifier pour l'émetteur :
- qu'il possède la clé publique se hachant en l'empreinte cryptographique renseignée dans la sortie de ladite transaction précédente, et
- que sa signature correspond à cette clé publique (et donc qu'il possède bien la clé privée correspondante).

Dans la suite de la présente description, on désignera comme une donnée d'identification toute donnée issue desdites données descriptives permettant d'identifier la transaction, en particulier un identifiant unique Txid, la signature ScriptSig, l'empreinte cryptographique de la clé publique du bénéficiaire scriptPubKey, et/ou l'identifiant de la transaction précédente Previous tx.

De manière préférée, les données descriptives de la transaction comprennent également une donnée d'aléa, insérée par le dispositif client 2. Par donnée d'aléa, on entend une donnée inutile à la transaction, mais que le dispositif client 2 pourra définir et ainsi vérifier la présence plus tard. De manière préférée, la donnée d'aléa pourra être une valeur pseudo-aléatoire, et elle pourra être insérée dans un champ adapté, en particulier le OP_RETURN existant dans les transactions Bitcoin (d'une taille de 80 octets).

De manière préférée, le présent procédé commence par une étape (a) de publication de la transaction à vérifier, que l'on suppose émise par un dispositif client 2 (généralement le dispositif client 2 demandant la vérification de la transaction comme expliqué), ayant requis alors la mémorisation, dans la base de données 3, des données descriptives de la transaction. Comme expliqué, cette étape (a) est mise en œuvre par le dispositif valideur de transactions 1 et comprend avantageusement la vérification de la validité des données représentatives de la transaction, de sorte à s'assurer que la transaction n'est pas frauduleuse (vérification de la signature de l'émetteur, de l'existence du bénéficiaire, et le cas échéant de la disponibilité des fonds, mais également que la transaction n'est pas déjà dans un autre bloc). Si c'est le cas, l'étape (a) comprend en outre préférentiellement la génération et l'ajout à ladite base de données 3 de type chaîne de blocs d'un nouveau bloc constitué des données descriptives d'un ensemble de transactions comprenant ladite transaction donnée à valider, i.e. l'assemblage de cet ensemble de transaction en tant que contenu du bloc, de sorte que tout tiers accédant à la base de données 3 pourra constater une fois que ce bloc est publié l'existence de la transaction. Dans l'exemple de Bitcoin, au sein d'un bloc (dans son contenu), les transactions sont stockées sous la forme d'un arbre de Merkle. Ensuite, l'en-tête est adjoint au bloc, et il s'agit de la partie complexe.

De manière classique, cette partie consiste en la détermination de la valeur d'un nonce associé au bloc (et de façon générale des valeurs de l'en-tête du bloc) telle qu'un critère spécifique à la chaîne de blocs du système de transaction est vérifié.

Ce critère est préférentiellement au moins fonction du nonce et d'un fragment du contenu du bloc, notamment une condition sur une empreinte cryptographique d'un n-uplet d'au moins ledit nonce et le fragment du contenu du bloc, en particulier le fait (dans le cas de Bitcoin) que ladite empreinte cryptographique commence par un certain nombre de zéros selon le niveau de difficulté actuel. Le présent procédé ne sera pas limité à ce mode de réalisation, et la condition pourra par exemple porter sur une signature du bloc.

Ledit fragment du contenu du bloc est avantageusement une empreinte indirecte de l'ensemble des transactions du bloc, par exemple la racine de l'arbre des transactions du bloc si elles sont stockées sous la forme d'un arbre de Merkle.

Ladite empreinte cryptographique d'un n-uplet d'au moins ledit nonce et le fragment du contenu du bloc constitue avantageusement un identifiant du bloc.

De manière préférée, ledit n-uplet comprend avantageusement en outre l'identifiant du bloc précédent, et de manière particulièrement préférée il s'agit d'un sextuplet constitué :
- du numéro de version,
- de l'empreinte cryptographique du bloc précédent,
- dudit fragment du contenu du bloc (la racine de l'arbre des transactions du bloc),
- de l'horodatage (par exemple temps écoulé depuis le 1er janvier 1970 0 h, en secondes),
- du niveau de difficulté,
- du nonce.

En pratique, l'étape (a) est tentée simultanément par un grand nombre de dispositifs valideurs de transactions 1, la détermination de la bonne valeur du nonce consiste généralement à tester un grand nombre de valeurs jusqu'à ce que le critère soit vérifié. Une fois la bonne valeur du nonce déterminée, toutes les données ci-dessus peuvent être renseignées dans l'en-tête du bloc, et ce bloc soumis aux autres dispositifs valideurs de transactions 1, qui en vérifient la validité (en vérifiant ledit critère, i.e. en recalculant ladite empreinte cryptographique d'un n-uplet d'au moins ledit nonce et le fragment du contenu du bloc) avant de le rediffuser à leur tour, et de l'ajouter dans la base de données 3 à la suite de la chaîne. Le dispositif valideur de transactions 1 est alors rémunéré, et les autres dispositifs valideurs de transactions 1 doivent recommencer à travailler sur un nouveau bloc.

A ce stade-là, le bloc généré à l'étape (a) est public, et les transactions qu'il contient peuvent être vues par tous, y compris les dispositifs clients 2.

Or, comme expliqué, si la vérification d'un bloc est bien plus facile que la détermination de la valeur correcte du nonce (et donc triviale pour les dispositifs valideurs de transactions 1 qui ont une forte puissance de calcul), cette vérification peut rester trop lourde pour un dispositif client 2 très simple tel qu'une carte à puce.

Le présent procédé propose astucieusement de faire vérifier au dispositif client 2 non pas la validité du bloc, mais simplement une preuve du fait qu'il existe un bloc valide publié dans ladite base de données 3 tel que ledit bloc contient des données descriptives de ladite transaction.

Plus précisément, il reste toujours possible de vérifier directement la validité d'un bloc de manière conventionnelle, mais dans le présent procédé le dispositif client 2 reçoit ladite preuve qui le dispense de cette vérification.

Par preuve, on entend une preuve mathématique et plus précisément une preuve à divulgation nulle de connaissances. Traditionnellement, les preuves à divulgation nulle de connaissance sont utilisées pour éviter l'interactivité. Plus précisément, la preuve permet d'avoir la garantie d'une propriété sur des données, sans qu'il soit nécessaire de transmettre ces données, qui peuvent être sensible (cas de données biométriques par exemple, la preuve ne révélant rien d'autre que le fait que ces données biométriques sont bien possédées par le producteur de la preuve).

Le protocole Pinocchio présenté dans la publication « Bryan Parno, Craig Gentry, Jon Howell, and Mariana Raykova, Pinocchio: Nearly Practical Verifiable Computation, in Proceedings of the IEEE Symposium on Security and Privacy, IEEE, 21 May 2013 » a été un des premiers protocoles de calcul vérifiable permettant à l'exécutant de calculer de manière vérifiable l'application d'une fonction quelconque et au donneur d'ordre de vérifier la preuve associée en un temps de calcul inférieur à celui nécessaire pour réaliser le calcul lui-même.

Ainsi, dans une étape (b) le dispositif de preuve 4 génère une preuve du fait qu'il existe un bloc valide publié dans ladite base de données 3 tel que ledit bloc contient des données descriptives de ladite transaction.

Plus précisément, ladite preuve garantit l'affirmation suivante : « étant donnée au moins une donnée d'identification d'une transaction à vérifier, il existe un bloc de la chaîne de blocs tel que :
- le bloc est valide,
- ladite donnée d'identification de la transaction apparait dans le bloc ».

Ainsi, on peut s'assurer de l'existence d'un tel bloc et donc de la validité de la transaction sans avoir à vérifier ce bloc. Le protocole cryptographique donne une preuve rapide à vérifier (moins d'une demi-seconde) et qu'on ne peut pas falsifier : il est quasi impossible (probabilité inférieure à 1/2⁸⁰, voire inférieur à 1/2¹²⁸ selon les paramètres choisis pour réaliser la preuve, celle-ci étant alors plus lente à réaliser) de faire accepter une preuve de l'affirmation ci-dessus si le processus ne s'est pas déroulé conformément à ce qui est spécifié.

Naturellement, l'étape (b) comprend avantageusement la vérification préalable par le dispositif de preuve 4 que ledit bloc contenant des données descriptives de ladite transaction est valide, en vérifiant le critère prévu, typiquement en recalculant l'empreinte cryptographique du n-uplet d'au moins le nonce et le fragment des données de transactions contenues, comme expliqué ci-avant. A noter que la vérification de la validité du bloc peut également comprendre la vérification de la syntaxe et de la sémantique du bloc, i.e. la vérification que le bloc est bien formé conformément aux spécifications de la chaîne de blocs.

L'étape (b) peut préalablement comprendre l'identification de ce bloc, par recherche de ladite donnée d'identification de la transaction. Les données de tous les blocs sont en effet publiques et une simple recherche textuelle permet de retrouver le bon bloc.

On comprend qu'ainsi il suffit que le dispositif de preuve 4 ait accès à la base de données 3 de type chaîne de blocs, et que le dispositif client 2 lui ait envoyé ladite donnée d'identification de la transaction à vérifier.

De manière particulièrement préférée, ladite preuve est également une preuve du fait qu'un identifiant dudit bloc (contenant des données descriptives de ladite transaction à vérifier) a pour empreinte cryptographique une empreinte cryptographique donnée (dite candidate).

La preuve est alors plus précisément une preuve à divulgation nulle de connaissances du fait qu'étant données une empreinte cryptographique candidate et une donnée d'identification de la transaction à vérifier, il existe un bloc valide publié dans ladite base de données 3 tel que ledit bloc contient des données descriptives de ladite transaction et qu'un identifiant dudit bloc a pour empreinte cryptographique ladite empreinte cryptographique candidate.

Cela offre un niveau de sécurité supplémentaire sur la preuve.

### Génération de preuve

De façon préférée, ladite preuve (à divulgation nulle de connaissances) est un objet cryptographique de type zkSNARK.

zkSNARK signifie « zero-knowledge Succinct Non Interactive ARgument of Knowledge », i.e. Argument de connaissance non interactive à divulgation nulle de connaissances. Il s'agit d'une primitive cryptographique construite autour de la notion de preuve. Les chercheurs en informatique théorique et en cryptographie se sont intéressés depuis longtemps à la notion de preuve. Il existe des résultats théoriques permettant de produire une preuve très courte et sécurisée d'un algorithme mais le temps pour réaliser cette preuve est hors de portée et le restera malgré l'augmentation de la puissance de calcul des ordinateurs. Une des raisons tient au pouvoir que l'on donne à l'entité qui réalise la preuve, le dispositif de preuve 4 (appelée aussi le prouveur). Dans les résultats théoriques sur les preuves, le prouveur a une puissance de calcul infinie et les preuves restent sécurisées malgré cela.

La notion de preuve a ensuite été relâchée, le protocole ne cherchant à se protéger que d'un prouveur qui aurait une puissance de calcul importante mais bornée. Le résultat du protocole n'est plus une preuve mais un argument. C'est à partir de cette notion d'argument que les systèmes pratiques de calcul vérifiables se sont construits. Une exigence supplémentaire dans un système produisant un argument est que cet argument soit non interactif : le vérifieur et le prouveur n'ont pas besoin d'interagir pour produire l'argument.

Depuis 2010, des réalisations de zkSNARKs ont été présentées : il s'agit d'arguments dont la taille est courte (quelques éléments d'une courbe elliptique), qui ne nécessitent pas d'interactivité et qui de plus permettent au prouveur d'effectuer une preuve à divulgation nulle de connaissance i.e. la preuve ne contient aucune information non triviale sur les entrées fournies par le prouveur.

Il existe plusieurs protocoles qui réalisent concrètement des zkSNARKs, et l'homme du métier pourra les utiliser indifféremment dans le présent procédé :
- Le protocole Pinocchio déjà évoqué ;
- Le protocole Gepetto, présenté dans la publication « Craig Costello, Cedric Fournet, Jon Howell, Markulf Kohlweiss, Benjamin Kreuter, Michael Naehrig, Bryan Parno, and Samee Zahur, Geppetto: Versatile Verifiable Computation, in Proceedings of the IEEE Symposium on Security and Privacy, IEEE, 18 May 2015 », qui est une amélioration de Pinocchio ;
- Le protocole présenté dans la publication et suivantes « Eli Ben-Sasson, Alessandro Chiesa, Daniel Genkin, Eran Tromer, Madars Virza. SNARKs for C: Verifying Program Executions Succinctly and in Zéro Knowledge. In Proceedings of the 33rd Annual International Cryptology Conférence, CRYPTO '13, pages 90-108, 2013", implémenté open-source sous la forme d'une librairie appelée libsnark, optimisant le protocole produisant un zkSNARK dans Pinocchio en améliorant l'expressivité, c'est-à-dire le type de programmes ou d'algorithme qu'il est possible de vérifier.

Pour prendre l'exemple du protocole Pinocchio, ce protocole comporte plusieurs parties :
1. Un programme classique est traduit sous la forme d'un circuit arithmétique, c'est-à-dire d'un ensemble de relations entre les entrées et les sorties du programme traduites uniquement à l'aide d'additions et de multiplications d'éléments d'un corps fini. Il faut remarquer que tous les programmes peuvent en théorie être traduits sous cette forme mais qu'une partie seulement de ces programmes admet une traduction efficace sous forme de circuit.
2. Le circuit arithmétique obtenu est représenté efficacement à l'aide de trois familles de polynômes auxquelles s'ajoute un polynôme supplémentaire, appelé polynôme cible. Ces familles de polynômes forment des « QuadraticArithmetic Programs » (QAPs). Elles encodent les relations entre les entrées et les sorties de chaque porte multiplicative du circuit, les relations des portes additives étant intégrées dans la première porte multiplicative qui suit dans le calcul.

Ces QAPs sont reliés au calcul vérifiable par le point suivant : un calcul y = C(x) est correct pour une entrée x si et seulement si toutes les relations décrivant le circuit arithmétique correspondant sont satisfaites en fixant comme valeur d'entrée x et comme valeur de sortie y. Les QAPs permettent en quelque sorte de compresser toutes les contraintes à vérifier dans une seule relations à vérifier : un polynôme construit à partir de la valeur x et des trois familles du QAP doit diviser le polynôme cible. 3. Un protocole cryptographique prend alors en entrée un QAP associé à un programme, génère des clés d'évaluation et de vérification qui utilisent des courbes elliptiques pour cacher les relations polynômiales. Le polynôme prouvant que le calcul a été effectué correctement est alors calculé directement à l'aide des relations cachées dans la courbe elliptique. La relation de divisibilité se traduit uniquement à l'aide d'un nombre constant d'éléments de la courbe elliptique, c'est-à-dire que la preuve est de taille constante. La vérification de cette preuve est extrêmement rapide.

Le protocole permet de plus d'obtenir que des entrées du calcul fournies par le prouveur soient privées : il permet de cacher les valeurs du prouveur dans la réalisation de la preuve en les multipliant par un multiple du polynôme cible, ce qui ne modifie pas le fait que le polynôme « preuve » soit divisible par le polynôme cible.

Ce polynôme « preuve », quand il est caché dans une courbe elliptique constitue un zkSNARK. Le protocole Pinocchio permet à celui qui réalise la preuve de cacher certaines des entrées du calcul dont il fait la preuve. Dans le présent cas, il s'agit de réaliser le calcul suivant :
Entrée : l'empreintes cryptographiques candidate, le résultat de la vérification de la validité du bloc (i.e. un booléen), les données descriptives de la transaction et un vecteur d'initialisation IV
Entrée privée : le contenu du bloc
Sortie : la preuve π que le prouveur connaît bien le bloc valide, dont l'identifiant se hache en ladite empreinte cryptographique candidate, et qui contient lesdites données descriptives de ladite transaction.

A noter que sont connus des protocoles prévus pour la génération d'une preuve de bon déroulement d'une fonction de hachage, que l'homme du métier pourra directement utiliser même s'ils ne sont pas optimaux. La difficulté est d'obtenir un temps de calcul raisonnable pour réaliser la preuve et des tailles de clés d'évaluation et de vérification qui ne sont pas trop conséquentes.

Le protocole Zerocash (IEEE Security & Privacy 2014) de Ben-Sasson et al., propose la définition d'un circuit arithmétique pour vérifier la fonction de compression de SHA-256 qui comporte environ 30 000 portes multiplicatives. Ceci donne un temps de réalisation de preuve d'environ 5 secondes (par niveau de compression, vérifier la fonction de hachage entière qui comprend de nombreuses itérations de la fonction de compression sera nettement plus long), ce qui reste élevé et largement améliorable.

Le protocole ZKBoo, présenté dans la publication « ZKBoo : faster zero-knowledge for boolean circuits » de Giacomelli, Madsen et Orlandi (Usenix Security 2016) » permet de meilleures performances (preuve en 50 ms, vérification en 70 ms) par itération de la fonction de compression, mais la taille de la preuve est conséquente (800 Ko) d'autant plus qu'elle ne semble avoir été mesurée que sur une application de la fonction de compression.

### Suite du procédé

Dans une étape (c), le dispositif de preuve 4 transmet au dispositif client 2 ladite preuve, et éventuellement ladite donnée d'identification de la transaction et/ou l'empreinte cryptographique candidate. Le bloc en lui-même n'a pas à être transmis.

Dans une étape (d), le dispositif client 2 vérifie que la preuve est valide. Si ladite donnée d'identification de la transaction utilisée est transmise, le dispositif client 2 la vérifie également (i.e. s'assure que ladite donnée d'identification transmise de la transaction correspond à celle de la transaction telle qu'émise par le dispositif client 2).

Si c'est le cas, l'utilisateur U est assuré que la transaction est valide.

La vérification de la preuve à l'étape (d) n'est pas interactive (le dispositif client 2 n'a pas besoin de contacter le dispositif de preuve 1) et se fait simplement en temps constant en vérifiant que la preuve est valide, ce qui démontre (à une probabilité infime près) au dispositif client 2 que la propriété prétendue est vraie, i.e. qu'il existe un bloc valide publié dans ladite base de données 3 tel que ledit bloc contient des données descriptives de ladite transaction, malgré l'absence du contenu de ce bloc.

La preuve est courte (voir très courte - de l'ordre de quelques centaines d'octets), la transmettre avec diverses données ne pose aucun problème de bande passante. De plus, la vérification de cette preuve est facile ce qui est compatible avec la puissance de calcul le cas échéant limitée du dispositif client 2. La génération de la preuve est quant à elle plus lourde en termes de temps de calcul, mais comme l'étape (b) est mise en œuvre du côté dispositif de preuve 4 ce temps de calcul additionnel n'est pas problématique.

### Ensemble d'équipements

Selon un deuxième aspect, est proposé un ensemble de vérification d'une transaction dans une base de données 3 de type chaîne de blocs pour la mise en œuvre du procédé selon le premier aspect.

L'ensemble comprend au moins un dispositif client 2, un dispositif de preuve 4 et le cas échéant au moins un dispositif valideur de transaction 1.

Le dispositif de preuve 4, qui est typiquement un serveur de confiance, est configuré pour générer une preuve (en particulier à divulgation nulle de connaissances) du fait qu'il existe un bloc valide publié dans ladite base de données 3 tel que ledit bloc contient des données descriptives de ladite transaction, et transmettre au dispositif client 2 au moins ladite preuve. Le dispositif de vérification 2 quant à lui configuré pour vérifier que la preuve est valide. L'éventuel dispositif valideur de transactions 1 configuré pour publier ladite transaction dans la base de données 3 de type chaîne de blocs, et le dispositif de preuve 4 peut être configuré pour vérifier la validité de ce bloc.

### Produit programme d'ordinateur

Selon un troisième et un quatrième aspects, l'invention concerne un produit programme d'ordinateur comprenant des instructions de code pour l'exécution (en particulier sur les moyens de traitement de données des dispositifs 1, 2, 4) d'un procédé selon le premier aspect de l'invention de vérification d'une transaction dans une base de données 3 de type chaîne de blocs, ainsi que des moyens de stockage lisibles par un équipement informatique (une mémoire des dispositifs 1, 2, 4) sur lequel on trouve ce produit programme d'ordinateur.

## Revendications

1. Procédé de vérification d'une transaction dans une base de données (3) de type chaîne de blocs, le procédé étant **caractérisé en ce qu'**il comprend des étapes de :
(b) génération par un dispositif de preuve (4) d'une preuve du fait qu'il existe un bloc valide publié dans ladite base de données (3) tel que ledit bloc contient des données descriptives de ladite transaction ;
(c) transmission à un dispositif client (2) d'au moins ladite preuve ;
(d) vérification par le dispositif client (2) que la preuve est valide.

2. Procédé selon la revendication 1, dans lequel les données descriptives de ladite transaction contenues dans ledit bloc comprennent au moins une donnée d'identification de la transaction, l'étape (c) comprend en outre la transmission au dispositif client (2) de ladite donnée d'identification de la transaction, et l'étape (d) comprend la vérification de ladite donnée d'identification transmise de la transaction.

3. Procédé selon la revendication 2, dans lequel ladite transaction est émise par le dispositif client (2), la vérification de ladite donnée d'identification transmise de la transaction comprenant la vérification qu'elle correspond à une donnée d'identification de la transaction telle qu'émise par le dispositif client (2).

4. Procédé selon la revendication 3, dans lequel les données descriptives de ladite transaction contenues dans ledit bloc comprennent également une donnée d'aléa, l'étape (c) comprend en outre la transmission au dispositif client (2) de ladite donnée d'aléa, et l'étape (d) comprenant la vérification la ladite donnée d'identification transmise de la transaction correspond à une donnée d'aléa définie par le dispositif client (2).

5. Procédé selon la revendication 4, dans lequel ladite donnée d'aléa est inséré par le dispositif client (2) dans un champ adapté de la transaction, en particulier un champ OP_RETURN.

6. Procédé selon l'une des revendications 2 à 5, dans lequel ladite donnée d'identification de la transaction est choisie parmi un identifiant de la transaction, une signature de transaction au moyen d'une clé privée d'un utilisateur du dispositif client (2), une empreinte cryptographique d'une clé publique d'un bénéficiaire de la transaction, un identifiant d'une transaction précédente de la transaction.

7. Procédé selon l'une des revendications 1 à 6, dans lequel l'étape (b) comprend également la transmission au dispositif client (2) d'une empreinte cryptographique candidate, ladite preuve étant également une preuve du fait qu'un identifiant dudit bloc a pour empreinte cryptographique ladite empreinte cryptographique candidate.

8. Procédé selon l'une des revendications 1 à 7, comprenant une étape (a) de publication de ladite transaction dans la base de données (3) de type chaîne de blocs par un dispositif valideur de transactions (1).

9. Procédé selon la revendication 8, dans lequel l'étape (a) comprend la génération dudit bloc contenant des données descriptives de ladite transaction et son ajout dans ladite base de données (3) type chaîne de blocs.

10. Procédé selon la revendication 9, dans lequel l'étape (a) comprend la vérification préalable de la validité de ladite transaction par le dispositif valideur de transactions (1), et l'étape (b) comprend la vérification par le dispositif de preuve (4) que ledit bloc contenant des données descriptives de ladite transaction est valide ; la vérification de la validité dudit bloc comprenant préférentiellement la vérification qu'un critère spécifique à la base de données (3) de type chaîne de blocs est vérifié par l'empreinte cryptographique d'un n-uplet d'au moins un nonce associé au bloc et un fragment du contenu du bloc, ou par une signature du bloc.

11. Procédé selon l'une des revendications 1 à 10, dans lequel ladite preuve est une preuve à divulgation nulle de connaissances, en particulier un objet cryptographique de type zkSNARK.

12. Procédé selon l'une des revendications 1 à 11, dans lequel le dispositif client (2) est de type carte à puce.

13. Ensemble de vérification d'une transaction dans une base de données (3) de type chaîne de blocs comprenant un dispositif client (2) et un dispositif de preuve (4) connectées, **caractérisé en ce que** :
∘ Le dispositif de preuve (4) est configuré pour générer une preuve du fait qu'il existe un bloc valide publié dans ladite base de données (3) tel que ledit bloc contient des données descriptives de ladite transaction, et transmettre au dispositif client (2) au moins ladite preuve ;
∘ le dispositif client (2) est configuré pour vérifier que la preuve est valide.

14. Produit programme d'ordinateur comprenant des instructions de code pour l'exécution d'un procédé selon l'une des revendications 1 à 12 de vérification d'une transaction dans une base de données (3) de type chaîne de blocs, lorsque ledit procédé est exécuté sur un ordinateur.

15. Moyen de stockage lisible par un équipement informatique sur lequel un produit programme d'ordinateur comprend des instructions de code pour l'exécution d'un procédé selon l'une des revendications 1 à 12 de vérification d'une transaction dans une base de données (3) de type chaîne de blocs.
